Europäisches Patentamt

European Patent Office

Office européen des brevets

(19)

(11) **EP 1 396 753 A1**

(12) # EUROPEAN PATENT APPLICATION

(43) Date of publication:
**10.03.2004 Bulletin 2004/11**

(51) Int Cl.⁷: **G03B 21/20**, G03B 27/54

(21) Application number: **03018744.7**

(22) Date of filing: **26.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.08.2002 JP 2002250828**

(71) Applicant: **Olympus Optical Co., Ltd.**
**Tokyo (JP)**

(72) Inventors:
- **Tani, Naoaki**
  **2-3, Kuboyama-cho Hachioji-shi Tokyo (JP)**
- **Kumai, Katsunori**
  **2-3, Kuboyama-cho Hachioji-shi Tokyo (JP)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **Illumination apparatus and display apparatus using the illumination apparatus**

(57)     Variations in the positions between an LED chip (20) and a tapered rod (30) are suppressed by holding the LED chip (20) and a holding glass (11) so as to be parallel to an outgoing plane of the LED chip (20) and maintain a predetermined interval from one another by a holder (10), and due to a solid tapered rod (30) being adhered to and fixed on an outgoing end (30B) thereof from which diffused light from the LED chip (20) is emitted, with an adhesive, at the same side as a surface facing the LED chip (20) of the holding glass (11).

F I G. 1

EP 1 396 753 A1

**Description**

The present invention relates to an illumination apparatus in which usage efficiency of light is high and variations in quantity of light are little, and to a display apparatus which projects and displays an image by using the illumination apparatus.

Conventionally, as a high directivity illumination apparatus used for a projection display apparatus or the like, examples in which an LED emitting diffused light and a tapered rod are provided thereat are disclosed in USP No. 6,318,863 and USP No. 6,227,669 B1. Namely, an LED light source is disposed so as to be close to a small-diameter opening of the tapered rod. Light which is incident from the small-diameter opening of the tapered rod into the tapered rod is transmitted so as to be totally reflected at the internal surface of the tapered rod. The respective light rays are converted so as to have small angles, and are emitted from a large-diameter opening of the tapered rod toward a projection lens. Accordingly, an illumination apparatus which can be used for a projection display apparatus using an image display member in which an allowable angle of incident light is narrow can be obtained.

Incidentally, a method for holding an optical part which has a rod shape is disclosed in Japanese Patent Application KOKAI Publication (JP-A) No. 8-227034 and JP-A No. 10-253923. The object of the method in 8-227034 is ensuring a positioning accuracy over a long period, and radiating a thermal stress. In order to attain the objects, a structure in which a rod integrator side surface is biased by a supporting member having a mask function as well and springs is disclosed. Further, the object of 10-253923 is in ensuring a heat resistance of the supporting member of the rod integrator whose temperature becomes high, and ensuring a structural holding accuracy. In order to attain the objects, a structure is disclosed in which the rod integrator is biased onto a supporting member formed from a metal plate by using spring members from the side surface, and at the same time, the rod integrator is biased in the optical axis direction due to the spring members being hooked on one portion of an incident end plane.

Further, as described in 6,318,863 and 6,227,669 B1, the tapered rod has a function in which the angle of the light ray incident on the tapered rod is converted into a small angle. Incidentally, the characteristic of angle conversion depends on the shape of the tapered rod. Namely, a basic conversion ratio of angle conversion is determined by a ratio of a dimension perpendicular to the optical axis of an outgoing end with respect to a dimension of the incident end perpendicular to the optical axis, and the larger the ratio is, the larger the basic conversion ratio of angle conversion is, and the smaller the angle the light ray can be converted into. Further, a dispersion with respect to the basic conversion ratio of angle conversion is determined by a ratio of a length of the tapered rod with respect to the dimension of the incident end in the direction perpendicular to the optical axis, and the larger the ratio is, the less the dispersion during homogeneous angle conversion. Accordingly, the smaller the incident end is, the smaller the entire tapered rod can be, while maintaining the same function of angle conversion.

On the other hand, because the LED is a surface light source radiating diffused light, in order to receive as much of the diffused light as possible from the LED, it suffices that angles at which the incident end of the tapered rod is looked from the respective points of the outgoing plane of the LED is made sufficiently large. Accordingly, it suffices that the dimension of the incident end of the tapered rod is made sufficiently large, as compared with the dimension of the outgoing plane of the LED. However, there is the problem that the tapered rod is made too large to obtain a desired function of angle conversion, as described above. Accordingly, in order to increase the quantity of light received and make the dimension of the entire tapered rod small, it is necessary for the dimensions of the incident end to be made to be close to the dimensions of the outgoing plane of the LED, and at the same time, for the incident end to be disposed so as to be close to the outgoing plane of the LED. In this case, there is the problem that even slight variations in the positions of the outgoing plane of the LED and the incident end of the tapered rod result in a large variation in the quantity of received light.

Moreover, when the tapered rod is used, if it is attempted that the tapered rod is held by being biased from the side surface as a conventional parallel rod integrator, there is the problem that the tapered rod easily slips out to the large-diameter opening side because the tapered rod is tapered. In particular, drift of the position arises due to vibrations, continuous thermal stress, or the like, due to aging, thus variations in quantity of the received light arise. Further, when it is attempted to bias the tapered rod in the optical axis direction at the incident end or the outgoing end, in order to prevent it from slipping out, there is the problem that efficiency deteriorates due to the light being shaded with an energizing member.

However, there is no description of various problems related to merchandising in the USP Nos. 6,318,863 and 6,227,669 B1, and in particular, not only is there no description relating to a concrete holding method when the LED and the tapered rod are disposed so as to be close to one another, but also there is no disclosure for overcoming the difficulty of holding the tapered rod. Moreover, in the JP-A Nos. 8-227034 and 10-253923 as well, no solution for the problems described above are offered.

The present invention has been achieved in consideration of the points, and an object of the present invention is to provide an illumination apparatus in which usage efficiency of light is high and variations in quantity of light are little, and a display apparatus using the illumination apparatus.

According to a first aspect of the present invention, there is provided an illumination apparatus comprising:

an illuminant configured to radiate diffused light from an outgoing plane;
a light guiding member including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

a holding member configured to integrally hold the illuminant and the light guiding member.

According to a second aspect of the present invention, there is provided a display apparatus comprising:

an illumination apparatus having:

an illuminant configured to radiate diffused light from an outgoing plane;
a light guiding member including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

a holding member configured to integrally hold the illuminant and the light guiding member;

an illumination lens configured to condense the light from the outgoing end of the light guiding member of the illumination apparatus; and
an image display member disposed in the vicinity of the rear side focal point of the illumination lens.

According to a third aspect of the present invention, there is provided a display apparatus comprising:

an illumination apparatus having:

an illuminant configured to radiate diffused light from an outgoing plane;
a light guiding member including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

a holding member configured to integrally hold the illuminant and the light guiding member;

an image display member disposed in the vicinity of the outgoing end of the light guiding member of the illumination apparatus; and
projection optical system configured to image an image of the image display member on a projection surface.

According to a fourth aspect of the present invention, there is provided an illumination apparatus comprising:

an illuminant for radiating diffused light from an outgoing plane;
light guiding means including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

holding means for integrally holding the illuminant and the light guiding means.

According to a fifth aspect of the present invention, there is provided a display apparatus comprising:

an illumination apparatus having:

an illuminant for radiating diffused light from an outgoing plane;
light guiding means including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

holding means for integrally holding the illuminant and the light guiding means;

an illumination lens for condensing the light from the outgoing end of the light guiding means of the illumination apparatus; and
image displaying means disposed in the vicinity of the rear side focal point of the illumination lens.

According to a sixth aspect of the present invention, there is provided a display apparatus comprising:

an illumination apparatus having:

an illuminant for radiating diffused light from an outgoing plane;
light guiding means including:

an incident end which is close to the outgoing plane of the illuminant and on which the diffused light is incident;
an outgoing end from which the incident light which was incident on the incident end is emitted, and which has an area larger than that of the incident end; and
a tapered portion which is positioned between the incident end and the outgoing end, and which has a tapered reflective surface transmitting the incident light to the outgoing end while reflecting the incident light; and

holding means for integrally holding the illuminant and the light guiding means;

image displaying means disposed in the vicinity of the outgoing end of the light guiding means of the illumination apparatus; and
projection optical means for imaging an image of the image displaying means on a projection surface.

This summary of the invention does not necessarily describe all necessary features so that the invention may also be a sub-combination of these described features.
The invention can be more fully understood from the following detailed description when taken in conjunction with the accompanying drawings, in which:

FIG. 1 is a cross sectional view showing a structure of a first embodiment of an illumination apparatus of the present invention;
FIG. 2 is a cross sectional view showing a structure of a second embodiment of an illumination apparatus of the present invention;
FIG. 3 is a perspective view showing a structure of a third embodiment of an illumination apparatus of the present invention;
FIG. 4A is a perspective view showing a modification example of the third embodiment;
FIG. 4B is a diagram for explanation of the relationship between a holding portion and a tapered rod in the modified example of FIG. 4A;
FIG. 5 is a cross sectional view showing the other modification example of the third embodiment;
FIG. 6 is a cross sectional view showing a structure of a fourth embodiment of an illumination apparatus of the present invention;
FIG. 7 is a cross sectional view showing a structure of a fifth embodiment of an illumination apparatus of the present invention;
FIG. 8 is a cross sectional view showing a modification example of the fifth embodiment;
FIG. 9 is a cross sectional view showing a structure of a sixth embodiment of an illumination apparatus of the present invention;
FIG. 10 is a cross sectional view showing a structure of a seventh embodiment of an illumination apparatus of the present invention;
FIG. 11A is a cross sectional view showing a structure of an eighth embodiment of an illumination apparatus of the present invention;
FIG. 11B is an enlarged view of a portion shown by enclosing with the circle in FIG. 11A;
FIG. 12 is a cross sectional view showing a structure of a ninth embodiment of an illumination apparatus of the present invention;
FIG. 13A is a cross sectional view showing a structure of a tenth embodiment of an illumination apparatus of the present invention;
FIG. 13B is an enlarged view of a holding portion of a tapered rod thereof;

FIG. 14 is an enlarged view of the holding portion of the tapered rod for explanation of a modified example of the tenth embodiment;

FIG. 15 is an enlarged view of the holding portion of the tapered rod for explanation of the other modified example of the tenth embodiment;

FIG. 16 is a diagram showing a structure of a first embodiment of a display apparatus using the illumination apparatus relating to one of the first through tenth embodiments as an eleventh embodiment of the present invention;

FIG. 17 is a diagram showing a structure of a second embodiment of a display apparatus using the illumination apparatus relating to one of the first through tenth embodiments as a twelfth embodiment of the present invention; and

FIG. 18 is a diagram showing a structure of a third embodiment of an display apparatus using the illumination apparatus relating to one of the first through tenth embodiments as a thirteenth embodiment of the present invention.

Hereinafter, embodiments of the present invention will be described with reference to the drawings.

[First Embodiment]

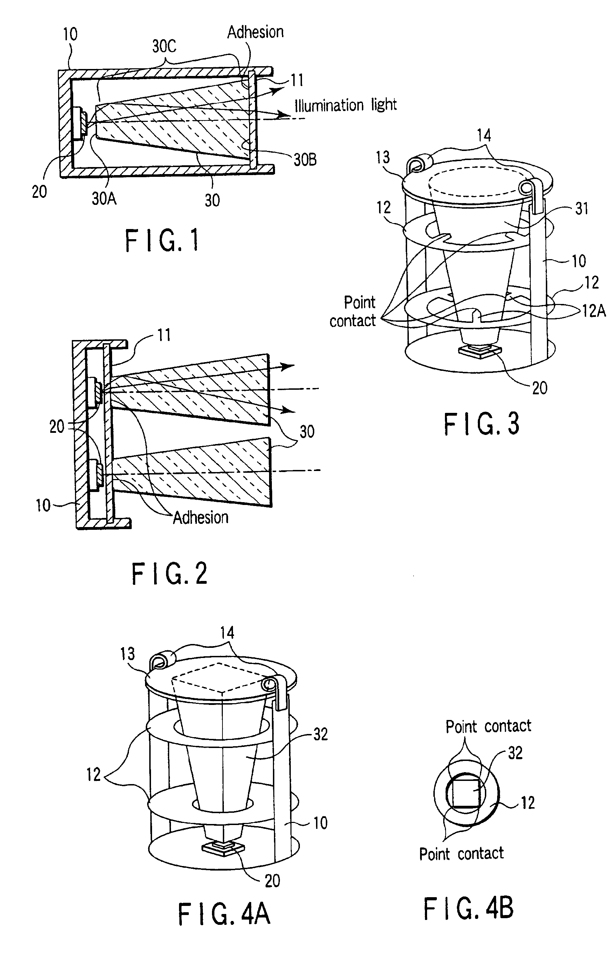

As shown in FIG. 1, in a first embodiment of an illumination apparatus of the present invention, a holder 10 serving as a holding member holds an LED chip 20 serving as the illuminant and a holding glass 11 serving as the translucent holding member so as to be parallel to an outgoing plane of the LED chip 20 and maintain a predetermined interval. A solid tapered rod 30 serving as a light guiding member is adhered to and fixed on an outgoing end 30B thereof from which diffused light from the LED chip 20 is emitted, with a light transmitting adhesive. In this case, the entire surface of the outgoing end 30B of the tapered rod 30 is adhered to the holding glass 11 such that the center of an incident end 30A thereof corresponds to the center of the outgoing plane of the LED chip 20.

Namely, the tapered rod 30 is formed by the incident end 30A on which diffused light from the LED chip 20 is incident, the outgoing end 30B which is parallel to the incident end 30A and has an area larger than that of the incident end 30A, and from which light from the LED chip 20 incident from the incident end 30A is emitted, and a tapered portion 30C which joins the incident end 30A to the outgoing end 30B. Of the diffused light incident from the incident end 30A, the light ray which is incident at a small angle is emitted from the outgoing end 30B without being totally reflected at the tapered portion 30C. Further, the light ray which is incident at a large angle is totally reflected at the tapered portion 30C and is converted into a small angle, and is emitted from the outgoing end 30B.

Note that, in the present embodiment and the following respective embodiments, the cross sectional shape of the tapered rod 30 is not particularly limited, and may be round, rectangular, or polygonal (when the cross sectional shape is limited, that effect will be described each time).

Therefore, in accordance with the illumination apparatus having such a structure, due to the LED chip 20 serving as the illuminant and the tapered rod 30 serving as the light guiding member being integrally held by the holder 10 serving as the holding member, variations in the positions between the illuminant and the light guiding member can be suppressed. Therefore, the stable illumination apparatus in which variations in quantity of illumination light and illumination unevenness are small can be achieved.

Further, because the outgoing end 30B of the tapered rod 30 serving as the light guiding member is held by the holding glass 11 serving as the translucent holding member, loss in quantity of light by holding the outgoing end 30B can be prevented.

Moreover, because the holding glass 11 serving as a translucent holding member can be fixed at a place other than the optical path, the tapered rod 30 serving as the light guiding member can be held with no loss of light and with a simple structure.

Further, because light is reflected by total reflection, loss in quantity of light at the interior of the tapered rod 30 serving as the light guiding member can be reduced.

[Second Embodiment]

Next, a second embodiment of the present invention will be described.

As shown in FIG. 2, a point in which a structure of the second embodiment of the illumination apparatus of the present invention is different from the structure of the first embodiment is that the number of the LED chips 20 serving as the illuminants and the tapered rods 30 serving as the light guiding members are two. Furthermore, the two tapered rods 30 are adhered to and fixed on a surface at the side opposite to the surface facing the two above-described LED chips 20 of the holding glass 11 serving as the translucent holding member, at the incident ends 30A of these tapered rods 30.

Therefore, in accordance with the illumination apparatus of the second embodiment, in the same way as in the first embodiment, due to the illuminants and the light guiding members being integrally held by the holding member, variations in the positions between the illuminants and the light guiding members can be suppressed. Therefore, a stable illumination apparatus in which variations in quantity of illumination light and illumination unevenness are small can be achieved.

Further, because the incident ends of the light guiding members are held by the translucent holding member, loss in quantity of light by holding the incident ends can be prevented.

Moreover, in the same way as in the first embodiment, because the translucent holding member can be fixed at a place other than the optical path, the light guiding members can be held with no loss of light and with a simple structure. Further, in particular, in the second embodiment, because a plurality of light guiding members (tapered rods 30) can be held by one translucent holding member (holding glass 11), the plurality of light guiding members can be accurately positioned, and at the same time, variations in the positions thereof can be suppressed.

Further, in the same way as in the first embodiment, because light is reflected by total reflection, loss in quantity of light at the interior of the light guiding member can be reduced.

[Third Embodiment]

Next, a third embodiment of the present invention will be described.

As shown in FIG. 3, in the third embodiment of the illumination apparatus of the present invention, the tapered rod serving as the light guiding member is a circular tapered rod 31 whose cross sectional shape is circular. In this case, the LED chip 20 serving as the illuminant is held upward at the bottom face of the holder 10 serving as the holding member. Further, holding portions 12 for holding the circular tapered rod 31 serving as the light guiding member are provided at different heights at the holder 10. Projection portions 12A are provided so as to surround the circular tapered rod 31 at the positions that the holding portions 12 are divided into three by substantially equal angles at the respective holding portions 12, and the distal ends of the respective projection portions 12A point-contact the tapered portion of the circular tapered rod 31. In this state, an incident end of the circular tapered rod 31 faces the outgoing plane of the LED chip 20 so as to maintain a predetermined interval therefrom.

A circular pressure glass 13 serving as the translucent holding member contacts an outgoing end of the circular tapered rod 31. The pressure glass 13 is biased in the direction of the circular tapered rod 31 at two points of the direction of the diameter thereof by two elastic members (springs 14) provided at the upper portion of the holder 10. In accordance therewith, the outgoing end of the circular tapered rod 31 is pressed toward the incident end side by the pressure glass 13. Therefore, the circular tapered rod 31 and the LED chip 20 are integrally held by the holder 10.

In accordance with such a third embodiment, in the same way as in the first embodiment, due to the illuminant and the circular tapered rod 31 serving as the light guiding member being integrally held by the holding member, variations in the positions between the illuminant and the light guiding member can be suppressed. Therefore, a stable illumination apparatus in which variations in quantity of illumination light and illumination unevenness are small can be achieved.

Further, in the same way as in the first embodiment, because the outgoing end of the light guiding member is held by the translucent holding member, loss in quantity of light by holding the outgoing end can be prevented.

Moreover, in the third embodiment, because the light guiding member is held by the tapered portion side surface of the light guiding member (circular tapered rod 31) and the translucent holding member (pressure glass 13) at the outgoing end of the light guiding member, stable holding can be achieved with a simple structure without the incident end of the light guiding member being held.

Further, in the third embodiment, because a contact area of the light guiding member and the holding member (holder 10) can be made small, light which is leaked and diffused from the contact portion (the projection portions 12A of the holding portions 12) can be reduced, and loss in quantity of light by holding the light guiding member can be reduced.

Moreover, if the contact portions are adhered to one another, the contact area is made large due to extrusion of the adhesive or the like, and there are cases in which leaking light increases. However, in the third embodiment, because the contact portions are not adhered to one another, leaking light is little, and the holding can be stably carried out.

Further, in the same way as in the first embodiment, because light is reflected by total reflection, loss in quantity of light at the interior of the light guiding member can be reduced.

A modification example of the third embodiment will be described with reference to FIG. 4A and FIG. 4B. As shown in these drawings, a tapered rod serving as the light guiding member can be structured from a rectangular tapered rod 32 whose cross sectional shape is rectangular. In this case, different size circular holes are respectively opened at the two holding portions 12 of the holders 10. Further, the cross sectional rectangles of the rectangular tapered rod 32 are inscribed in the circular holes of the holding portions 12, and the rectangular tapered rod 32 and the holding portions 12 are point-contact at $4 \times 2 = 8$ points.

As the structure of such a modified example, the same effect as in the third embodiment as described above can be achieved.

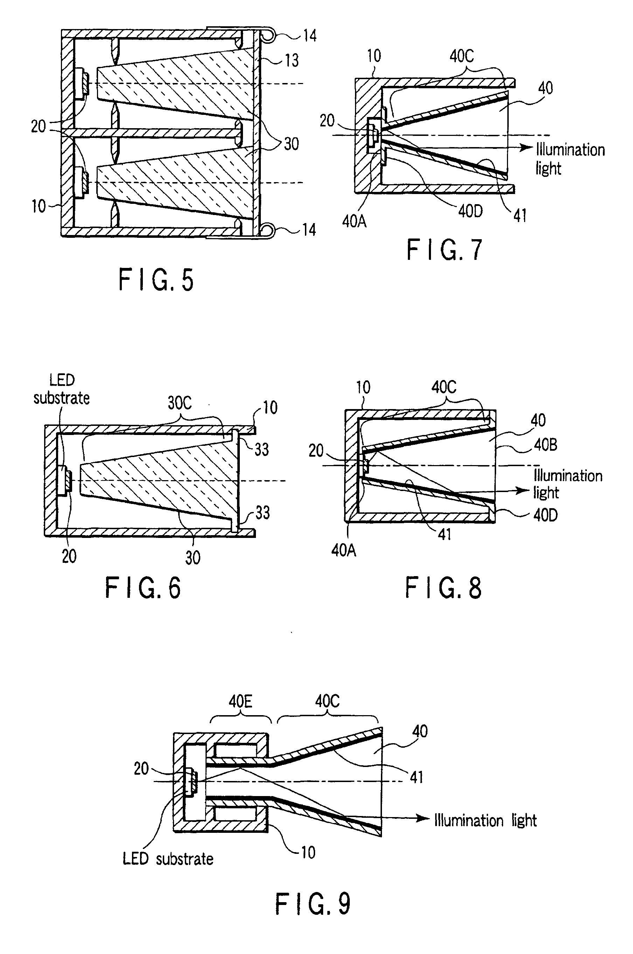

The other modified example of the third embodiment is shown in FIG. 5. In this modified example, a plurality of tapered rods 30 serving as light guiding members are pressed in the directions of the incident ends of the tapered rods 30 by the one pressure glass 13 serving as the translucent holding member.

In such a structure, in addition to the effect of the third embodiment as described above, even in the case of a plurality of light guiding members, because the plurality of light guiding members can be held by one translucent holding member, an exceptional effect that a holding mechanism can be structured from a low number of parts is achieved.

[Fourth Embodiment]

Next, a fourth embodiment of the present invention will be described.

As shown in FIG. 6, in the fourth embodiment of the illumination apparatus of the present invention, a supporting portion 33 having a diameter greater than that of the tapered portion 30C is extendedly provided in the direction parallel to the outgoing end plane at the outgoing end side of the tapered rod 30 serving as the light guiding member. The LED chip 20 serving as the illuminant and the supporting portion 33 of the tapered rod 30 are integrally supported by the holder 10 serving as the holding member. In this state, the incident end of the tapered rod 30 faces the outgoing plane of the LED chip 20 so as to maintain a predetermined interval between them.

Therefore, in accordance with the illumination apparatus having such a structure, in the same way as in the first embodiment, because variations in the positions between the illuminant and the light guiding member can be suppressed by the holding member integrally holding the illuminant radiating diffused light and the light guiding member, a stable illumination apparatus in which variations in quantity of illumination light and illumination unevenness are small can be achieved.

Further, in the fourth embodiment, because the light guiding member and the supporting portion are integrally structured, stable holding can be achieved regardless of the shape of the tapered portion of the light guiding member.

Moreover, in the same way as in the first embodiment, because light is reflected by total reflection, loss in quantity of light at the interior of the light guiding member can be reduced.

Note that, the example was described in which the diameter of the supporting portion 33 is larger than that of the tapered portion 30C, and the part which is extendedly provided has a disc shape. However, the supporting portion 33 is not limited thereto, and the supporting portion 33 may be a shape such as the part of the disc which is not supported by the holder 10 is chipped.

[Fifth Embodiment]

Next, a fifth embodiment of the present invention will be described.

As shown in FIG. 7, in the fifth embodiment of the illumination apparatus of the present invention, a hollow rod 40 is used as a light guiding member, and the hollow rod 40 is made to be tapered in shape. Further, the internal surface thereof is a metal reflective film 41 reflecting light. Further, a supporting portion 40D extendedly provided at the side outer than the tapered portion 40C in the direction parallel to the incident end 40A plane, is formed at the side of an incident end 40A. The hollow rod 40 is fixed on the holder 10 serving as the holding member by the supporting portion 40D. The LED chip 20 serving as the illuminant is held, at a position of the holder 10 close to the incident end 40A of the hollow rod 40, so as to maintain a predetermined interval from the incident end 40A of the hollow rod 40.

Therefore, in an illumination apparatus having such a structure, in the same way as in the first embodiment, because variations in the positions between the illuminant and the light guiding member can be suppressed due to the illuminant and the light guiding member being integrally held by the holding member, a stable illumination apparatus in which variations in quantity of illumination light and illumination unevenness are small can be achieved.

Further, in the same way as in the fourth embodiment, because the light guiding member and the supporting portion are integrally structured, stable holding can be achieved regardless of the shape of the tapered portion of the light guiding member.

Moreover, in accordance with the fifth embodiment, because the side surface of the light guiding member is a reflective mirror (metal reflective film 41), even if the side surface of the light guiding member is adhered and held by the holding member, there is no affect with respect to the reflective characteristic, and the holding structure can be easily structured.

A modified example of the fifth embodiment is shown in FIG. 8. As shown in the drawing, the supporting portion 40D may be provided at an outgoing end 40B side of the hollow rod 40 serving as the light guiding member. In this case, the LED chip 20 serving as the illuminant is positioned at the interior of the tapered portion 40C of the hollow rod 40. Accordingly, the light which is emitted in parallel to the outgoing plane of the LED chip 20 is guided to the outgoing end 40B side of the hollow rod 40 by the reflective film 41 at the interior of the tapered portion 40C of the hollow rod 40.

Therefore, in addition to the effect of the fifth embodiment as described above, by disposing the illuminant at the interior of the hollow rod 40 in this way, an exceptional effect that the light which is emitted in the direction parallel to the outgoing plane of the illuminant can be guided to the outgoing end 40B side of the hollow rod 40, and outgoing light of the illuminant can be guided to the outgoing end 40B side of the hollow rod 40 at high efficiency, is achieved.

[Sixth Embodiment]

Next, a sixth embodiment of the present invention will be described.

As shown in FIG. 9, in the sixth embodiment of the illumination apparatus of the present invention, the hollow rod 40 serving as the light guiding member is formed such that a supporting portion 40E whose cross sectional area does not vary and the tapered portion 40C whose cross sectional area increases as being toward the opening portion (outgoing end) are integrally formed. Further, the metal reflective film 41 is provided at the internal surface of the hollow rod 40, and light is reflected. The LED chip 20 serving as the illuminant is held at one end of the holder 10 serving as the holding member. Further, the hollow rod 40 having the structure is adhered and fixed by the holder 10 in a state in which the opening portion (incident end) at the supporting portion 40E side faces the outgoing plane of the LED chip 20, and has a predetermined distance from the LED chip 20.

Therefore, in an illumination apparatus having such a structure, in the same way as in the first embodiment, because variations in the positions between the illuminant and the light guiding member can be suppressed by the holding member integrally holding the illuminant which radiates diffused light and the light guiding member, a stable illumination apparatus in which variations in quantity of illumination light and illumination unevenness are small can be achieved.

Further, in the same way as in the fourth embodiment, because the light guiding member and the supporting portion are integrally structured, stable holding can be achieved regardless of the shape of the tapered portion of the light guiding member.

Moreover, in accordance with the sixth embodiment, because light is transmitted by the supporting portion of the light guiding portion, extension and folding of the optical path can be carried out by the supporting portion, the light guiding member can be transformed into a desired shape.

Further, in the same way as in the fifth embodiment, because the side surface of the light guiding member is the reflective mirror, even if the side surface of the light guiding member is adhered and held by the holding member, there is no affect with respect to the reflective characteristic, and the holding structure can be easily structured.

[Seventh Embodiment]

Next, a seventh embodiment of the present invention will be described.

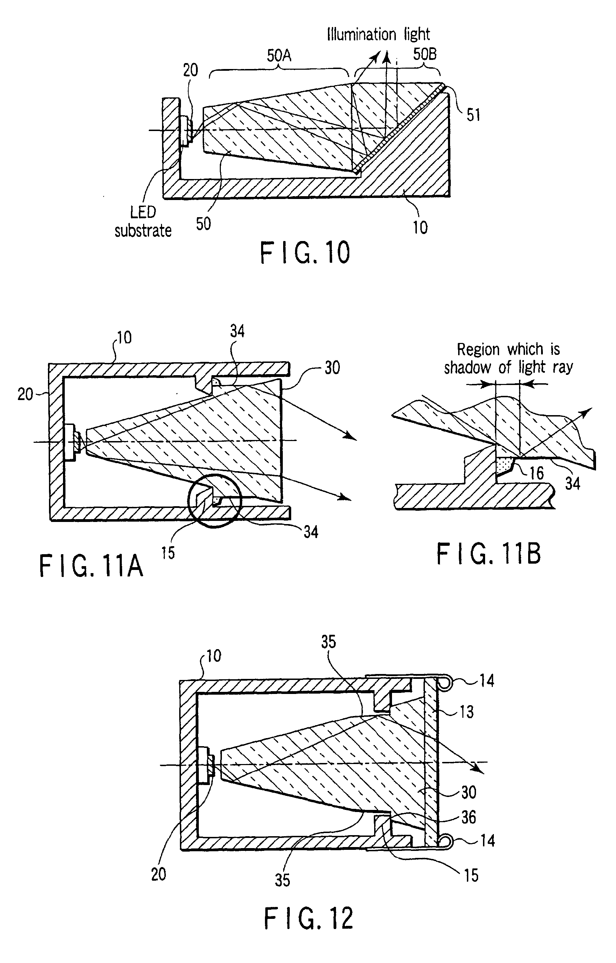

As shown in FIG. 10, in the seventh embodiment of the illumination apparatus of the present invention, a glass rod 50 formed from a tapered portion 50A whose cross-sectional area varies and a prismatic supporting portion 50B is used as a light guiding member. Here, assuming that a refractive index of the tapered portion 50A is $n_1$ and a refractive index of the supporting portion 50B is $n_2$, $n_1 < n_2$. Further, a metal reflective film 51 is provided at one surface of the supporting portion 50B. The glass rod 50 is adhered to and held at the surface at which the metal reflective film 51 is provided, by the holder 10 serving as the holding member. The LED chip 20 serving as the illuminant is held at the other end of the holder 10 such that the outgoing plane thereof faces the incident end which is a small-diameter opening of the glass rod 50 and maintains a predetermined distance.

In such a structure, the light ray incident from the incident end of the glass rod 50 is light-guided to the supporting portion 50B while the angle thereof is being converted into a small angle at the tapered portion 50A. Further, at the supporting portion 50B, the principal optical axis of the light ray is reflected so as to be turned by 90° upward by the metal reflective film 51 at the supporting portion 50B. At this time, because the refractive index of the supporting portion 50B is higher than that of the tapered portion 50A, the light ray reflected so as to return to the tapered portion 50A by the metal reflective film 51 is totally reflected at the interface between the supporting portion 50B and the tapered portion 50A, and is emitted from the outgoing end of the supporting portion 50B.

Therefore, in accordance with such a structure, in the same way as in the first embodiment, because variations in the positions between the illuminant and the light guiding member can be suppressed by the holding member integrally holding the illuminant which radiates diffused light and the light guiding member, a stable illumination apparatus in which variations in quantity of illumination light and illumination unevenness are small can be achieved.

Further, in the same way as in the fourth embodiment, because the light guiding member and the supporting portion are integrally structured, stable holding can be achieved regardless of the shape of the tapered portion.

Moreover, in the same way as in the first embodiment, because light is reflected by total reflection, loss in quantity of light in the interior of the light guiding member can be reduced.

Further, in particular, in the seventh embodiment, because light is reflected by the metal reflective film 51, leakage of light from the portion contacting with the holding member can be prevented regardless of the angle of incidence of the light which is incident on a portion contacting the holding member, and loss in quantity of light by holding the light guiding member can be reduced at a portion where an angle of incidence is large.

Moreover, because light is transmitted by the supporting portion of the light guiding member, extension and folding of the optical path can be carried out by the supporting portion, and the light guiding member can be transformed into a desired shape.

[Eighth Embodiment]

Next, an eighth embodiment of the present invention will be described with reference to FIG. 11A and FIG. 11B. Note that FIG. 11B is an enlarged view of a portion enclosed by the circle in FIG. 11A.

As shown in these drawings, in the present embodiment, a parallel portion 34 serving as a supporting portion is integrally structured so as to project from the tapered portion at the side surface of the tapered rod 30 serving as the light guiding member. Further, the tapered rod 30 contacts a rod supporting projection 15 of the holder 10 serving as the holding member at the portion of the difference between the supporting portion (parallel portion 34) and the tapered portion of the tapered rod 30, and the tapered rod 30 is adhered and fixed by the holder 10 with adhesive 16 at the region which is a shadow of light ray from the parallel portion 34. The LED chip 20 serving as the illuminant is held by the holder 10 at a position which faces the incident end of the tapered rod 30 and maintains a predetermined distance from the incident end.

In such a structure, of the light rays incident from the incident end of the tapered rod 30, the light which is totally reflected at the tapered surface goes toward the outgoing end while the angle thereof is converted into a small angle, and the light which is totally reflected at the parallel portion 34 goes toward the outgoing end without the angle thereof being converted. Note that, the surface region to which the adhesive 16 is adhered is made to be a shadow of the border with the tapered portion, and because there is no light incident on this region, there is no loss of light which is guided even if the light cannot be totally reflected due to the adhesion.

The parallel portions 34 were described in the example in which the facing surfaces thereof are parallel in the cross section of the tapered rod 30. The parallel portions 34 are not limited so as to be parallel to one another in this way. It suffices that the parallel portions 34 facing so as to meet conditions that effective light is totally reflected respectively have angles.

Therefore, in accordance with the eighth embodiment, in the same way as in the first embodiment, because variations in the positions between the illuminant and the light guiding member can be suppressed by the holding member integrally holding the illuminant which radiates diffused light and the light guiding member, a stable illumination apparatus in which variations in quantity of illumination light and illumination unevenness are small can be achieved.

Further, in the same way as in the fourth embodiment, because the light guiding member and the supporting portion are integrally structured, stable holding can be achieved regardless of the angle of the tapered portion.

Moreover, in the same way as in the first embodiment, because light is reflected by total reflection, loss in quantity of light at the interior of the light guiding member can be reduced.


[Ninth Embodiment]

Next, a ninth embodiment of the present invention will be described.

As shown in FIG. 12, in the ninth embodiment of the illumination apparatus of the present invention, a gentle inclined portion 35 serving as the supporting portion is integrally structured so as to bite into the tapered portion at the side surface of the tapered rod 30 serving as the light guiding member. The gentle inclined portion 35 is made such that the inclination thereof is gentle as compared with the other tapered portion, and is steeper than being parallel. Further, the supporting portion (gentle inclined portion 35) of the tapered rod 30 and a difference portion 36 of the tapered portion contact the rod supporting projection 15 of the holder 10 serving as the holding member. Further, the pressure glass 13 serving as the translucent holding member contacts a large-diameter opening portion of the holder 10, and the tapered rod 30 is pressed down and fixed on the incident end side thereof via the pressure glass 13 by the springs 14 provided at the holder 10. Moreover, at the holder 10, the LED chip 20 serving as the illuminant is held at a position which faces the incident end of the tapered rod 30 and maintains a predetermined distance from the incident end.

Of the light rays incident from the incident end of the tapered rod 30, the light which was totally reflected at the tapered surface goes toward the outgoing end while the angle thereof is converted into a small angle, and the light which was totally reflected at the gentle inclined portion 35 goes toward the outgoing end while the angle thereof is converted at a ratio less those that of the other tapered portions. Note that, the surfaces of the difference portions 36 at which the tapered rod 30 and the holder 10 contact each other are parallel to the outgoing end of the tapered rod 30, and can be stably held by the pressure with the springs 14. Moreover, because the light incident from the incident end does not reach the surfaces of the difference portions 36, there is no loss of light even if the light cannot be totally reflected due to the contact with the holder 10.

Therefore, in accordance with the illumination apparatus having such a structure, in the same way as in the first embodiment, because variations in the positions between the illuminant and the light guiding member can be suppressed by the holding member integrally holding the illuminant which radiates diffused light and the light guiding member, a stable illumination apparatus in which variations in quantity of illumination light and illumination unevenness are small can be achieved.

Further, because the incident end or the outgoing end of the light guiding member is held by the translucent member, loss in quantity of light by holding the incident end or the outgoing end can be prevented.

Moreover, because the light guiding member and the supporting portion are integrally structured, stable holding can be achieved regardless of the angle of the tapered portion.

Further, because light is reflected by total reflection, loss in quantity of light at the interior of the light guiding member can be reduced.

[Tenth Embodiment]

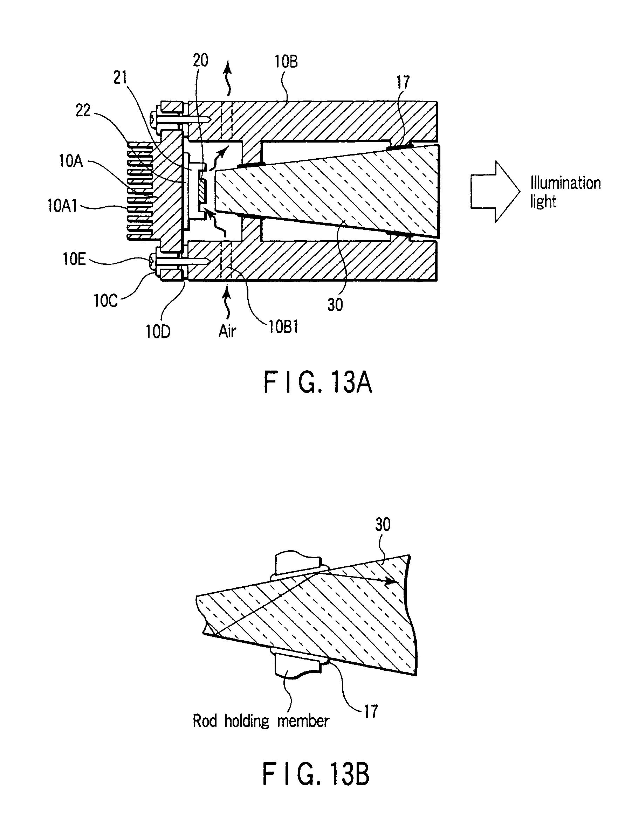

Next, a tenth embodiment of the present invention will be described with reference to FIG. 13A and FIG. 13B. Note that FIG. 13B is an enlarged view of a holding portion of a tapered rod.

In the tenth embodiment, the LED chip 20 serving as the illuminant is held by a holder 10A serving as one of holding members via an LED base 21 and an LED substrate 22. The LED holder 10A has a radiating fin 10A1 for radiating heat which the LED chip 20 generates, at the side opposite to the surface at which the LED chip 20 is held. The LED holder 10A is formed from a material having a high thermal conductivity, for example, a metal such as aluminum or the like, in order to efficiently transmit the heat from the above-describe LED chip 20 to the radiating fin 10A1.

The LED holder 10A is combined with a rod holder 10B serving as the other holding member by a screw 10E via a collar 10C and a spacer 10D which are formed from a material having a low thermal conductivity, for example, a ceramic or a plastic. Therefore, it can be reduced that the heat generated by the LED chip 20 is transmitted from the LED holder 10A to the rod holder 10B. The rod holder 10B holds the side surface portion of the tapered rod 30 serving as the light guiding member by a low refractive index adhesive 17 serving as a low refractive index material whose refractive index is lower than that of the light guiding member. A thin film of the low refractive index adhesive 17 is present between the tapered rod 30 and the rod holder 10B. Therefore, the light which reaches the adhered portion of the light transmitted in the tapered rod 30 is totally reflected at the internal surface of the tapered rod 30 due to a difference between the refractive indexes of the tapered rod 30 and the low refractive index adhesive 17, and goes toward the outgoing end of the tapered rod 30. In this way, the tapered rod 30 and the LED chip 20 are integrally held by the plurality of members.

Note that, in the rod holder 10B, a space which is surrounded by the LED holder 10A and the rod holder 10B and in which the LED chip 20 is held, and air holes 10B1 communicatively connected to the exterior are provided, and heated air in the vicinity of the LED chip 20 is exhausted.

Therefore, in accordance with the illumination apparatus having such a structure, in the same way as in the first embodiment, because variations in the positions between the illuminant and the light guiding member can be suppressed by the holding member integrally holding the illuminant which radiates diffused light and the light guiding member, a stable illumination apparatus in which variations in quantity of illumination light and illumination unevenness are small can be achieved.

Further, because light is reflected by total reflection, loss in quantity of light at the interior of the light guiding member can be reduced.

Moreover, in the tenth embodiment, because the light ray is totally reflected at the interface between the light guiding member and the low refractive index material (low refractive index adhesive 17), the light which is leaked and diffused from the portion contacting with the holding member can be prevented, and loss in quantity of light by holding the light guiding member can be eliminated.

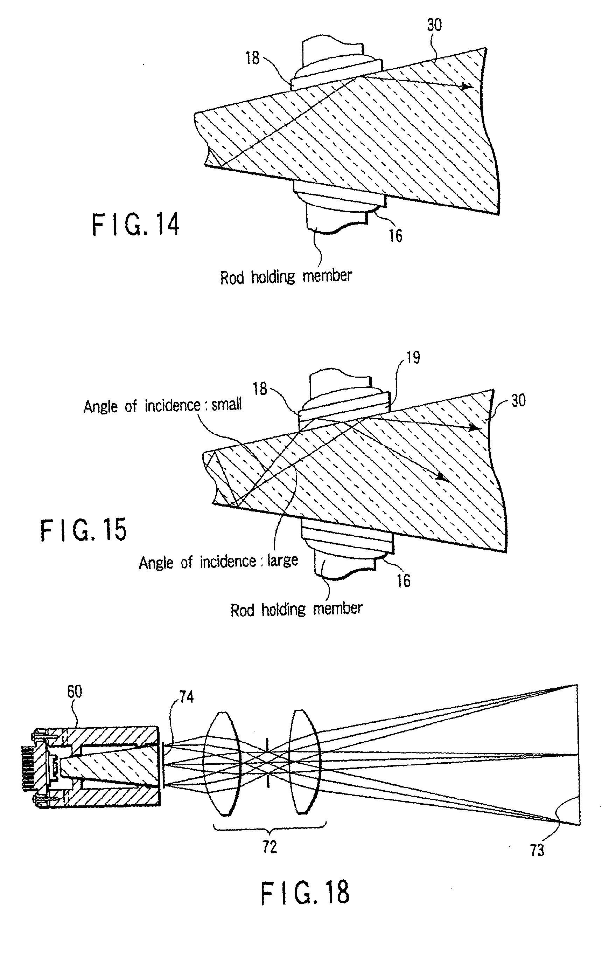

FIG. 14 is for explanation of the modified example of the tenth embodiment, and is an enlarged view of a holding portion of the same tapered rod as in FIG. 13B. Namely, the metal film 18 is formed at a portion of the tapered rod 30 serving as the light guiding member at which the rod holder 10B serving as the holding member contacts. Further, the tapered rod 30 is adhered to and fixed on the rod holder 10B with the adhesive 16 via the metal film 18.

Provided that it is structured in this way, in addition to the effect of the tenth embodiment as described above, the following excellent effect is further achieved. Namely, because light is reflected by the metal film 18, leakage of the light from the portion contacting the holding member can be prevented regardless of the angle of incidence of the light incident on the portion contacting the holding member. Therefore, loss in quantity of light by holding the light guiding member can be reduced at incidence angles within a broader range.

FIG. 15 is for explanation of the other modified example of the tenth embodiment, and is an enlarged view of the holding portion of the same tapered rod as in FIG. 13B. In this case, a low refractive index dielectric film 19 serving as the low refractive index film whose refractive index is lower than that of the light guiding member is formed at a portion, at which the rod holder 10B serving as the holding member contacts, of the tapered rod 30 serving as the light guiding member. Further, the metal film 18 is formed further outwardly thereof. The tapered rod 30 is adhered to and fixed on the rod holder 10B with the adhesive 16 via the low refractive index dielectric film 19 and metal film 18.

In accordance with such a structure, when an angle of incidence of the light ray which is incident from the interior to the side surface of the light guiding member is large, the light ray is totally reflected at the interface between the low refractive index dielectric film 19 and the light guiding member. Further, when an angle of incidence of the light ray which is incident from the interior to the side surface of the light guiding member is small, the light ray is not reflected at the interface, and is leaked in the low refractive index dielectric film 19. However, the light ray is reflected by the metal film 18.

Accordingly, provided that it is structured in this way, in addition to the effect of the tenth embodiment as described above, the following excellent effect is further achieved. Namely, because the light ray is totally reflected at the interface between the low refractive index dielectric film 19 and the light guiding member when an angle of incidence of the light ray which is incident from the interior to the side surface of the light guiding member is large, and the light ray is reflected by the metal film 18 when an angle of incidence of the light ray is small, leakage of the light from the portion contacting with the holding member can be prevented regardless of the angle of incidence of the light which is incident on the portion contacting the holding member. Further, at the same time, because loss in quantity of light can be eliminated with respect to the light whose angle of incident is small, loss in quantity of light by holding the light guiding member can be reduced.

[Eleventh Embodiment]

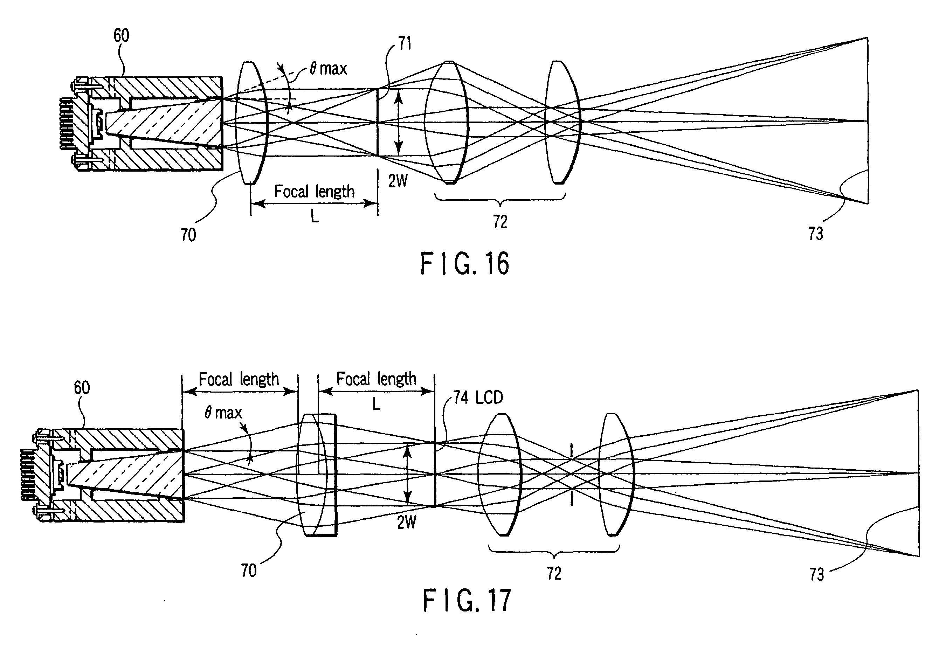

Next, an eleventh embodiment of the present invention will be described. FIG. 16 is a diagram showing a structure of a first embodiment of a display apparatus using the illumination apparatus relating to the first through tenth embodiments as the eleventh embodiment of the present invention.

Namely, the display apparatus of the present embodiment has an illumination lens 70 which condenses light from the outgoing end onto the outgoing end side of the illumination apparatus 60 relating to the tenth embodiment of the present invention, for example, as shown in FIG. 13A. Further, a slide film 71 serving as an image display member is disposed in the vicinity of the rear side focal point position of the illumination lens 70. Assuming that a focal length of the illumination lens 70 is L, a width dimension of the slide film 71 is 2W, and a maximum angle of the light ray radiated from the outgoing end of the illumination apparatus 60 is θmax, it is structured so as to meet

$$\tan^{-1}(W/L) \leq \theta\max.$$

Moreover, a projection lens 72 formed from two lenses is disposed at the rear side of the slide film 71, and an image of the slide film 71 is imaged and projected on an image projection surface 73.

In a display apparatus structured in this way, the light emitted from the outgoing end of the light guiding member can be condensed onto a given region at the rear side focal point position of the illumination lens 70 regardless of the outgoing position from the outgoing end. Accordingly, the slide film 71 serving as the image display member can be efficiently illuminated, and a bright display image can be obtained.

Further, in general, an image height Y at the focal point position with respect to an angle of view θ of the light ray incident onto the lens whose focal length is L can be expressed by Y = L × tanθ. Therefore, when the width dimension of the image display member is 2W, assuming that the maximum angle of the light ray radiated from the outgoing end of the illumination apparatus 60 is θmax, due to the relationship of $\tan^{-1}(W/L) \leq \theta\max$ being satisfied, the light emitted from the outgoing end of the light guiding member can be effectively irradiated with respect to the size of the image display member. Note that, from the standpoint of usage efficiency of light, it suffices that θmax is made as small as much as possible within a range in which the relational expression is met.

Note that, in the present embodiment, the slide film 71 is used as an image display member. However, it goes without saying that the image display member may be an LCD panel or a display device such as a digital micromirror device (DMD: registered trademark of Texas Instruments Incorporated, USA) as disclosed in USP 6,129,437, or the like. Further, a transmission type lens is used as the illumination lens 70. However, the illumination lens 70 may be structured from a reflective mirror having the same effect or a combination of a lens and a mirror. Moreover, it may be structured such that the projection lens 72 is not used and the image display member is directly seen, and an eyepiece for imaging an image on a retina may be used in place of the projection lens 72.

[Twelfth Embodiment]

Next, a twelfth embodiment of the present invention will be described. FIG. 17 is a diagram showing a structure of a second embodiment of the display apparatus using the illumination apparatus relating to the first through tenth embodiments as the twelfth embodiment of the present invention.

Namely, in the present embodiment, the illumination lens 70 which condenses light from the outgoing end is disposed at the outgoing end side of the illumination apparatus 60 relating to the tenth embodiment of the present invention, for example, as shown in FIG. 13A such that the outgoing end of the illumination apparatus 60 is positioned at the front side focal point position of the illumination lens 70. Furthermore, an LCD 74 serving as the image display member is disposed in the vicinity of a rear side focal point position of the illumination lens 70. Assuming that a focal length of the illumination lens 70 is L, a width dimension of the LCD 74 is 2W, and a maximum angle of the light ray radiated from the outgoing end of the illumination apparatus 60 is θmax, it is structured so as to meet

$$\tan^{-1}(W/L) \leq \theta\max.$$

Moreover, a projection lens 72 formed from two lenses is disposed at the rear side of the LCD 74, and an image of the LCD 74 is imaged and projected on the image projection surface 73.

Due to the display apparatus being structured in this way, in the same way as in the eleventh embodiment, because the light emitted from the outgoing end of the light guiding member can be condensed onto a given region at the rear side focal point position of the illumination lens 70 regardless of the outgoing position from the outgoing end, the LCD 74 serving as the image display member can be efficiently illuminated, and a bright display image can be obtained.

Further, in particular in the present embodiment, as well as the fact that the light emitted from the outgoing end of the light guiding member can be condensed onto a given region at the rear side focal point position of the illumination lens regardless of the outgoing position, the variation in angle of incidence of the light ray condensed within the illuminated range can be made small. Accordingly, in particular, the LCD 74 serving as the image display member in which a dependency on angle of incidence is large can be efficiently illuminated, and a bright display image with no unevenness can be obtained.

Further, in general, an image height Y at the focal point position with respect to the angle of view θ of the light ray incident on the lens whose focal length is L can be expressed by $Y = L \times \tan\theta$. Therefore, when the width dimension of the image display member is 2W, assuming that the maximum angle of the light ray radiated from the outgoing end of the illumination apparatus 60 is θmax, due to the relationship of $\tan^{-1}(W/L) \leq \theta$max being met, the light emitted from the outgoing end of the light guiding member can be effectively irradiated with respect to the size of the image display member. Note that, from the standpoint of usage efficiency of light, it suffices that θmax is made as small as possible within a range in which the relational expression is met.

Note that, in the present embodiment, the LCD 74 is used as an image display member. However, the image display member may be a slide film, a DMD, or the like. Further, a transmission type lens is used as the illumination lens 70. However, the illumination lens 70 may be structured from a reflective mirror having the same effect or a combination of a lens and a mirror. Moreover, it may be structured such that the projection lens 72 is not used and the image display member is directly seen, and an eyepiece for imaging an image on a retina may be used in place of the projection lens 72.

[Thirteenth Embodiment]

Next, a thirteenth embodiment of the present invention will be described. FIG. 18 is a diagram showing a structure of a third embodiment of the display apparatus using the illumination apparatus relating to the first through tenth embodiments as the thirteenth embodiment of the present invention.

Namely, in the present embodiment, the LCD 74 serving as the image display member is disposed in the vicinity of the outgoing end of the illumination apparatus 60 relating to the tenth embodiment of the present invention, for example, as shown in FIG. 13A, and the a projection lens 72 formed from two lenses serving as a projection optical system is disposed at the rear side of the LCD 74. An image of the LCD 74 is imaged and projected on the image projection surface 73 by the projection lens 72.

In accordance with the present embodiment, a display apparatus which projects an image with a simple structure and in which an optical efficiency is high can be realized.

Note that the LCD 74 is used as the image display member. However, the image display member may be a display device such as a slide film, a DMD, or the like. Moreover, transmission type lenses are used as the projection lens 72. However, the projection lens 72 may be structured from reflective mirrors having the same effect or a combination of a lens and a mirror.

The present invention is described above on the basis of the embodiments. However, the present invention is not limited to the embodiments described above, and it goes without saying that various modifications and applications are possible within a range which does not deviate from the gist of the present invention.

For example, the cross sectional shapes of the tapered rod 30, the hollow rod 40, and the tapered portion 50A of the glass rod 50 may be rectangular, circular or elliptical. Further, the material of the tapered rod 30 may be glass or a transparent resin.

Further, the incident end 30A and the outgoing end 30B of the tapered rod 30 are not limited so as to be parallel to one another. Further, the respective surfaces of the incident end 30A and the outgoing end 30B are not necessarily perpendicular to the central axis of the tapered rod 30.

Moreover, the display apparatus may be structured such that the outgoing end side of the light guiding member of the illumination apparatus 60 is pressured by using the illumination lens 70, the LCD 74, or the like, in place of the pressure glass 13 or the like.

**Claims**

1. An illumination apparatus comprising:

    an illuminant (20) for radiating diffused light from an outgoing plane; and
    light guiding means (30; 31; 32; 40; 50) including:

        an incident end (30A; 40A) which is close to the outgoing plane of the illuminant and on which the diffused light is incident;
        an outgoing end (30B; 40B) from which the incident light which was incident on the incident end is emitted, and which has an area larger than that of the incident end; and
        a tapered portion (30C; 40C; 50A) which is positioned between the incident end and the outgoing end, and which has a tapered reflective surface transmitting the incident light to the outgoing end while reflecting the incident light,

**characterized by** further comprising:

holding means (10; 10A, 10B) for integrally holding the illuminant and the light guiding means.

2. The illumination apparatus according to claim 1, **characterized in that** the holding means holds the light guiding means with a translucent holding member (11; 13) contacting the incident end or the outgoing end of the light guiding means.

3. The illumination apparatus according to claim 2, **characterized in that** the translucent holding member is fixed to at least one of the light guiding means.

4. The illumination apparatus according to claim 2, **characterized in that** the holding means holds side surfaces of the tapered portion of the light guiding means, and presses at least one of the light guiding means from the outgoing end side in the direction of the incident end by the translucent holding member.

5. The illumination apparatus according to claim 4, **characterized in that** the holding means holds the side surfaces of the tapered portion of the light guiding means with point contact.

6. The illumination apparatus according to claim 1, **characterized in that** the holding means holds the light guiding means with supporting portions (33; 40D; 40E; 50B; 34; 35) integrally formed with the tapered portion of the light guiding means.

7. The illumination apparatus according to claim 6, **characterized in that** the supporting portions have a function in which light from the incident end and the tapered portion of the light guiding means is transmitted while being reflected.

8. The illumination apparatus according to claim 1, **characterized in that** the light guiding means transmits the light incident from the incident end to the outgoing end by total reflection.

9. The illumination apparatus according to claim 8, **characterized in that** a low refractive index material (17) whose refractive index is lower than that of the light guiding means is interposed between the side surfaces of the light guiding means and the holding means.

10. The illumination apparatus according to claim 9, **characterized in that** the low refractive index material fixes the light guiding means and the holding means together.

11. The illumination apparatus according to claim 8, **characterized in that** a metal film (18) is provided at the side surfaces of the light guiding means which contacts the holding means.

12. The illumination apparatus according to claim 8, **characterized in that** a low refractive index material (19) whose refractive index is lower than that of the light guiding means and the metal film (18) are sequentially provided at the side surfaces of the light guiding means which contacts the holding means.

13. The illumination apparatus according to claim 1, **characterized in that** the light guiding means is a hollow structure whose side surface is formed from a reflective mirror (41), and transmits the light which is incident from the incident end, to the outgoing end by reflection.

14. A display apparatus **characterized by** comprising:

an illumination apparatus according to any one of claim 1 to claim 13; an illumination lens (70) for condensing the light from the outgoing end of the light guiding means of the illumination apparatus; and image displaying means (71; 74) disposed in the vicinity of the rear side focal point of the illumination lens.

15. The display apparatus according to claim 14, **characterized in that** the illumination lens is disposed such that the outgoing end of the light guiding means is positioned at the front focal point.

16. The display apparatus according to claim 14 or claim 15, **characterized in that**, when a width dimension of the image displaying means is 2W and a focal length of the illumination lens is L, a maximum angle of the light ray emitted from the outgoing end of the light guiding means is greater than or equal to

$$\tan^{-1}(W/L).$$

17. A display apparatus **characterized by** comprising:

an illumination apparatus according to any one of claim 1 to claim 13; image displaying means (74) disposed in the vicinity of the outgoing end of the light guiding means of the illumination apparatus; and projection optical means (72) for imaging an image of the image displaying means on a projection surface (73) .

F I G. 1

F I G. 2

F I G. 3

F I G. 4A

F I G. 4B

FIG. 5

FIG. 7

FIG. 6

FIG. 8

FIG. 9

FIG. 10

FIG. 11A

FIG. 11B

FIG. 12

F I G. 13A

Rod holding member

F I G. 13B

FIG. 14

Rod holding member

FIG. 15

Angle of incidence : small

Angle of incidence : large

Rod holding member

FIG. 18

FIG.16

FIG.17

European Patent
Office

**EUROPEAN SEARCH REPORT**

Application Number

EP 03 01 8744

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 6 318 863 B1 (CHAN SHENG-HSIUNG ET AL) 20 November 2001 (2001-11-20) * claim 1; figure 1 * --- | 1-17 | G03B21/20 G03B27/54 |
| A | US 2002/054275 A1 (YAMANAKA KAZUYA) 9 May 2002 (2002-05-09) * claims 1,2; figure 1 * --- | 1-17 | |
| A | EP 0 530 378 A (MITSUBISHI ELECTRIC CORP) 10 March 1993 (1993-03-10) * claim 1; figure 1 * --- | 1-3 | |
| A | US 6 139 156 A (OKAMORI SHINJI ET AL) 31 October 2000 (2000-10-31) * claim 1; figure 1 * ----- | 1,2 | |
| | | | TECHNICAL FIELDS SEARCHED (Int.Cl.7) G03B |

The present search report has been drawn up for all claims

| Place of search | Date of completion of the search | Examiner |
|---|---|---|
| THE HAGUE | 9 January 2004 | Romeo, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 396 753 A1

**ANNEX TO THE EUROPEAN SEARCH REPORT
ON EUROPEAN PATENT APPLICATION NO.**

EP 03 01 8744

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2004

| Patent document cited in search report | | Publication date | Patent family member(s) | | Publication date |
|---|---|---|---|---|---|
| US 6318863 | B1 | 20-11-2001 | TW | 380213 B | 21-01-2000 |
| | | | JP | 3159968 B2 | 23-04-2001 |
| | | | JP | 2000214532 A | 04-08-2000 |
| US 2002054275 | A1 | 09-05-2002 | JP | 2002148710 A | 22-05-2002 |
| EP 0530378 | A | 10-03-1993 | DE | 69228096 D1 | 18-02-1999 |
| | | | DE | 69228096 T2 | 01-07-1999 |
| | | | EP | 0530378 A1 | 10-03-1993 |
| | | | WO | 9216872 A1 | 01-10-1992 |
| | | | JP | 3122466 B2 | 09-01-2001 |
| | | | US | 5398086 A | 14-03-1995 |
| US 6139156 | A | 31-10-2000 | JP | 11142780 A | 28-05-1999 |

EPO FORM P0459

For more details about this annex : see Official Journal of the European Patent Office, No. 12/82

21